# EUROPÄISCHE PATENTSCHRIFT

(11) **EP 0 681 505 B1**
(45) Veröffentlichungstag und Bekanntmachung des Hinweises auf die Patenterteilung: **09.10.1996**
(21) Anmeldenummer: 94904634.6
(22) Anmeldetag: 06.01.1994
(51) Int. Cl.: B01D 27/08, B01D 29/11

(54) **ROHRVERLÄNGERUNG FÜR EINEN FILTERTOPF EINES RÜCKLAUFFILTERS**
LENGTHENING PIPE FOR THE FILTERING POT OF A RETURN FILTER
PROLONGATEUR DE TUYAU POUR LA CUVE DE FILTRATION D'UN FILTRE DE RETOUR

(30) Priorität: 27.01.1993 DE 4302161
(43) Veröffentlichungstag der Anmeldung: 15.11.1995
(73) Patentinhaber: ARGO GmbH für Fluidtechnik, 76703 Kraichtal-Menzingen (DE)
(72) Erfinder: BREUSCH, Norbert, D-74889 Sinsheim-Rohrbach (DE)
(74) Vertreter: Hoeger, Stellrecht & Partner
(86) Internationale Anmeldenummer: EP9400023
(87) Internationale Veröffentlichungsnummer: WO9416793

(56) Entgegenhaltungen:
- DE-A- 2 434 076
- FR-A- 2 397 130
- US-A- 3 804 258

## Beschreibung

Die Erfindung betrifft einen Filtertopf eines Rücklauffilters nach dem Oberbegriff des Patentanspruchs 1.

Derartige Filtertöpfe sind aus DE-A-24 34 076 oder FR-A-2 397 130 bekannt.

Zur Filtrierung von Hydraulikölen werden seit langem Rücklauffilter verwendet, die einen auf einem Hydrauliköltank befestigbaren Filterkopf, auf einer Seite des Filterkopfes einen Filtertopf, auf der anderen Seite einen lösbar angeordneten Deckel und ein im Filterkopf und Filtertopf durchgehend angeordnetes Filterelement aufweisen. Das zu filtrierende Hydrauliköl gelangt über eine Öffnung im Filterkopf durch das Filterelement und strömt aus einem am freien Ende des Filtertopfes abstehenden Auslaßstutzen zurück in den Hydrauliköltank. Um zu vermeiden, daß das gefilterte, rückströmende Hydrauliköl über dem Hydraulikölspiegel im Tank aus dem Filtertopf austritt und dadurch beim Auftreffen auf den Ölspiegel eine nachteilige Schaumbildung hervorgerufen wird, wird an dem Auslaßstutzen ein Verlängerungsrohr befestigt, das ein Einströmen des gefilterten Hydrauliköls direkt in das bereits im Tank befindliche Öl möglichst weit unter dem Hydraulikölspiegel gestattet. Um derartige Rücklauffilter bei Hydrauliköltanks unterschiedlicher Gestalt und Größe verwenden zu können, ist es erforderlich, an dem am Filtertopf angeordneten Auslaßstutzen Verlängerungsrohre unterschiedlicher Gestalt und Länge z.B. durch Formschluß zu befestigen.

Bei bekannten Verlängerungsrohren wird beispielsweise ein aus PVC bestehendes Kunststoffrohr erwärmt, auf den Auslaßstutzen des Filtertopfes aufgeschoben und mit einer handelsüblichen Schlauchschelle befestigt.

Bei anderen bekannten Verlängerungsrohren werden z.B. Metallrohre durch Schweißen oder Löten mit dem Filtertopf dicht verbunden.

Aufgabe der Erfindung ist es, ein Verlängerungsrohr zu vermitteln, das eine leicht handzuhabende, dichte und feste Verbindung des Verlängerungsrohres mit einem Auslaßstutzen eines Filtertopfes ermöglicht und am fertig montierten Filter angebracht werden kann. Dabei soll insbesondere auch ein Verlängerungsrohr für einen aus Kunststoff bestehenden Filtertopf geschaffen werden.

Die Aufgabe wird erfindungsgemäß durch die kennzeichnenden Merkmale des Patentanspruchs 1 gelöst.

Die nachfolgende Beschreibung einer bevorzugten Ausführungsform dient im Zusammenhang mit beiliegender Zeichnung der näheren Erläuterung. Es zeigen:
- Fig. 1: eine teilweise geschnittene Darstellung eines Filtertopfes mit einer erfindungsgemäßen Rohrverlängerung und
- Fig. 2: eine Schnittdarstellung entlang der Linie II-II der Fig. 1.

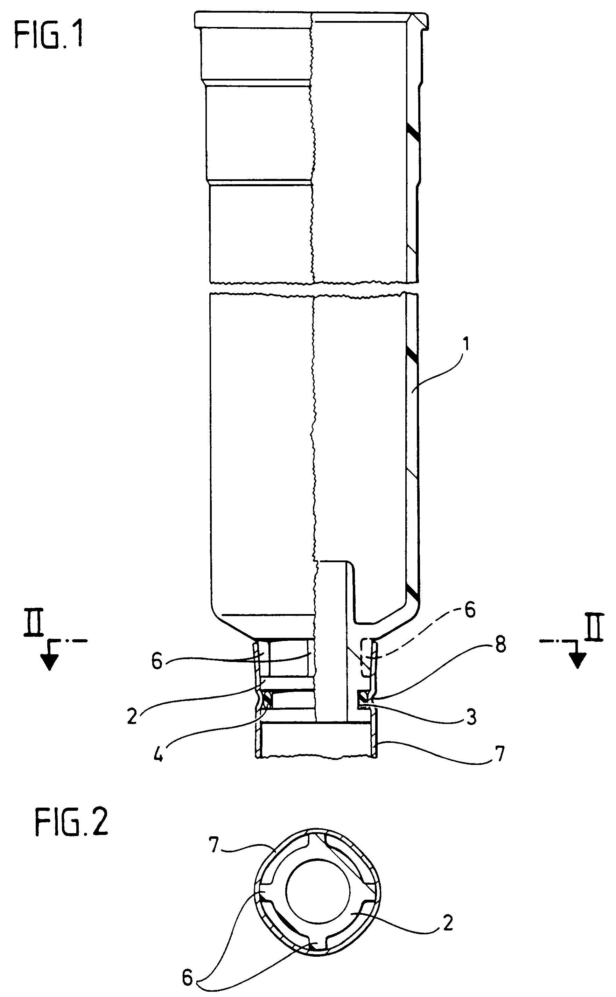

Wie in Fig. 1 dargestellt, ist an dem freien, in das Innere beispielsweise eines Hydrauliköltanks hineinreichenden Ende eines aus Kunststoff bestehenden Filtertopfes 1 mit diesem einstückig ein Auslaßstutzen 2 ausgebildet. An dem Auslaßstutzen 2 ist benachbart zu dessen freier Stirnseite eine in Umfangsrichtung verlaufende Ringnut 3 angeordnet. In die Ringnut 3 ist eine an sich bekannte Ringdichtung 4 eingelegt, die radial nicht über den äußeren Umfang des Auslaßstutzens 2 vorsteht.

An dem Auslaßstutzen 2 sind im Bereich zwischen der Ringnut 3 und dem unteren Ende des Filtertopfes 1 vier radial vorstehende Stege 6 angeordnet. Diese Stege verlaufen in Axialrichtung zur Ringnut 3 hin in sich leicht konisch verjüngender Form. Die Stege 6 sind symmetrisch über die äußere Umfangsfläche des Auslaßstutzens 2 verteilt. Statt der dargestellten vier Stege 6 können auch nur drei oder mehr als vier, beispielsweise fünf oder sechs Stege vorgesehen sein.

Zur Befestigung der Rohrverlängerung wird ein aus Metall, vorzugsweise aus Aluminium oder einer Aluminiumlegierung bestehendes, relativ dünnwandiges Rohr 7 über den Auslaßstutzen 2 geschoben. Dabei wird das Rohr 7 aufgrund der konisch auslaufenden Stege 6 an seinem über den Auslaßstutzen 2 geschobenen Ende aufgeweitet und in eine im wesentlichen vierkantförmige, abgerundete Ecken aufweisende, Gestalt deformiert (Fig. 2). Diese Deformation verhindert ein Wackeln des Rohres 7, bedingt durch Toleranzen der Teile, auf dem Stutzen 2. An dem auf den Auslaßstutzen 2 aufgeschobenen Rohr 7 wird sodann eine ringförmig in Umfangsrichtung radial einwärts verlaufende Sicke 8 erzeugt, die so weit in die Ringnut 3 hineinreicht, daß eine sichere, radiale Abdichtung und Befestigung am Auslaßstutzen 2 des Filtertopfes 1 erzielt wird. Diese Sicke 8 übt einen radial nach einwärts gerichteten Druck auf die Ringdichtung 4 aus, wodurch eine Abdichtung des Rohres 7 gegen den Auslaßstutzen 2 des Filtertopfes 1 und ein zusätzlicher Halt des Rohres 7 am Auslaßstutzen 2 erzielt wird.

Besonders vorteilhaft ist es, daß bei der erfindungsgemässen Rohrverlängerung die Ringdichtung 4 nicht über den äußeren Umfang des Auslaßstutzens 2 vorsteht und somit das abgesägte Ende des Rohres 7, welches durch das Sägen einen scharfkantigen Grat aufweist, beim Aufschieben auf den Auslaßstutzen 2 nicht mit der Ringdichtung 4 in Berührung kommt und daher nicht zerschneiden oder auf andere Weise beschädigen kann. Dies senkt die Herstellungskosten des Metallrohres 7, da ein Anfasen seines abgesägten Endes entfallen kann.

Anstelle der axial verlaufenden konischen Stege 6 kann auch ein axial verlaufender, sich nach oben zum Filtertopf 1 hin etwas erweiternder Konus in Form einer in sich geschlossenen Kegelfläche vorgesehen sein.

## Patentansprüche

1. Filtertopf (1) eines Rücklauffilters mit einem vom Filtertopf (1) an dessen freiem Ende abstehenden Auslaßstutzen (2) und mit einem an dem Auslaßstutzen befestigten Verlängerungsrohr (7),
**dadurch gekennzeichnet, daß**
an dem Auslaßstutzen (2) eine in Umfangsrichtung verlaufende Ringnut (3) angeordnet ist, daß in die Ringnut (3) eine Ringdichtung (4) eingelegt ist, die radial nicht über den äußeren Umfang des Auslaßstutzens (2) vorsteht, daß der äußere Umfang des Auslaßstutzens (2) im Bereich zwischen der Ringnut (3) und dem Filtertopf (1) als sich konisch zur Ringnut (3) hin verjüngender Teil ausgebildet ist, daß auf diesen konischen Teil das aus Metall bestehende Verlängerungsrohr (7) aufgeschoben ist, daß das aufgeschobene Verlängerungsrohr (7) durch den konischen Teil (6) zur Erzielung eines festen Sitzes aufgeweitet ist, und daß in das aufgeschobene Verlängerungsrohr (7) eine in die Ringnut (3) reichende, gegen die Ringdichtung (4) abdichtende Sicke (8) eingebracht ist.

2. Filtertopf nach Anspruch 1, dadurch gekennzeichnet, daß das Verlängerungsrohr (7) aus Aluminium oder einer Aluminiumlegierung besteht.

3. Filtertopf nach Anspruch 1, dadurch gekennzeichnet, daß der konische Teil die Gestalt radial vorspringender, axial verlaufender konischer Stege (6) hat.

4. Filtertopf nach Anspruch 1, dadurch gekennzeichnet, daß der konische Teil als in sich geschlossene konische Umfangsfläche ausgebildet ist.

## Claims

1. A filtering jug (1) of a return line filter having an outlet connection piece (2) protruding from the filtering jug (1) at its free end and having an extension pipe (7) fixed to the outlet connection piece,
**characterised in that** an annular groove (3) extending in the circumferential direction is provided at the outlet connection piece (2),
**in that** an annular seal (4), which does not extend radially over the outer circumference of the outlet connection piece (2), is inserted into the annular groove (3),
**in that** the outer circumference of the outlet connection piece (2) is constructed in the region between the annular groove (3) and the filtering jug (1) as a part tapering conically to the annular groove (3),
**in that** the metal extension pipe (7) is pushed onto this conical part,
**in that** this pushed-on extension pipe (7) is expanded by the conical part (6) to achieve a secure fit,
**and in that** a bead (8) extending into the annular groove (3) and providing a seal against the annular seal (4) is inserted into the pushed-on extension pipe (7).

2. A filtering jug according to Claim 1,
**characterised in that** the extension pipe (7) is made of aluminium or of an aluminium alloy.

3. A filtering jug according to Claim 1,
**characterised in that** the conical part has the form of radially projecting, axially extending conical webs (6).

4. A filtering jug according to Claim 1,
**characterised in that** the conical part is constructed as an intrinsically closed conical circumferential surface.

## Revendications

1. Cuve de filtration (1) d'un filtre de retour, avec un embout d'évacuation (2) faisant saillie à l'extrémité libre de la cuve de filtration (1), et avec un prolongateur de tuyau (7) fixé sur l'embout d'évacuation,
caractérisée en ce qu'une rainure annulaire (3) s'étendant en direction circonférentielle est agencée sur l'embout d'évacuation (2), en ce qu'un joint d'étanchéité (4) est inséré dans la rainure annulaire (3), joint qui ne dépasse radialement pas de la périphérie extérieure de l'embout d'évacuation (2), en ce que la périphérie extérieure de l'embout d'évacuation (2) est réalisée, dans la région comprise entre la rainure annulaire (3) et la cuve de filtration (1), sous forme d'une partie se rétrécissant coniquement en direction de la rainure annulaire (3), en ce que le prolongateur de tuyau (7) réalisé en métal est enfilé sur cette partie conique, en ce que le prolongateur de tuyau enfilé (7) est élargi par la partie conique (6) afin d'obtenir un ajustement serré, et en ce qu'une moulure (8), pénétrant dans la rainure annulaire (3) et s'appliquant en étanchéité contre le joint d'étanchéité annulaire (4), est pratiquée dans le prolongateur de tuyau enfilé (7).

2. Cuve de filtration selon la revendication 1, caractérisée en ce que le prolongateur de tuyau (7) est réalisé en aluminium ou en un alliage d'aluminium.

3. Cuve de filtration selon la revendication 1, caractérisée en ce que la partie conique a la forme de nervures coniques (6) radialement saillantes, qui s'étendent axialement.

4. Cuve de filtration selon la revendication 1, caractérisée en ce que la partie conique est réalisée sous la forme d'une surface circonférentielle conique en soi, qui est fermée.
